Europäisches Patentamt

(19) European Patent Office

Office européen des brevets

(11) Numéro de publication: **0 212 687**
A2

(12) # DEMANDE DE BREVET EUROPEEN

(21) Numéro de dépôt: **86200884.4**

(22) Date de dépôt: **22.05.86**

(51) Int. Cl.⁴: **A 01 K 5/02**

(30) Priorité: **21.06.85 BE 2060722**

(43) Date de publication de la demande: **04.03.87**
**Bulletin 87/10**

(84) Etats contractants désignés: **AT CH DE FR GB IT LI LU NL SE**

(71) Demandeur: **POLYMETAL P.V.B.A.,**
**Kieldrechtsebaan 35a, B-2789 Verrebroek (BE)**

(72) Inventeur: **van Eynde, Mauritius M.,**
**Kieldrechtsebaan 19, B-2789 Verrebroek (BE)**

(74) Mandataire: **Donné, Eddy, M.F.J.Bockstael**
**Arenbergstraat 13, B-2000 Anvers (BE)**

(54) Procédé de remplissage d'auges d'alimentation et dispositif pour sa mise en oeuvre.

(57) Procédé de remplissage d'auges d'alimentation, par lequel de la nourriture est débitée automatiquement dans les auges d'une étable, caractérisé essentiellement en ce chaque animal dispose de sa propre auge munie ou non d'un système à réserve et en ce que les auges sont desservies au moyen d'un robot d'alimentation autonome, susceptible de se déplacer automatiquement, le dosage de la nourriture au niveau de chaque auge s'effectuant en fonction du besoin individuel de l'animal nourri par l'entremise de son auge.

PROCEDE DE REMPLISSAGE D'AUGES D'ALIMENTATION ET DISPOSITIF POUR SA MISE EN OEUVRE.

La présente invention a trait à un procédé de remplissage automatique d'auges d'alimentation individuelles, c'est-à-dire, en d'autres termes, à un procédé de remplissage rationnel de chaque auge d'alimentation d'animaux séparés l'un de l'autre dans une étable.

L'invention se rapporte, en particulier, à la distribution de la nourriture dans les porcheries, telles que surtout les installations d'élevage de truies.

On sait que, jusqu'à présent, l'alimentation des truies s'est effectuée de manière traditionnelle par simple voie manuelle dans 95% des cas. Toutefois, l'augmentation incessante du nombre de truies dans les porcheries a créé le besoin de dispositifs spéciaux pour l'alimentation automatique des truies, c'est-à-dire, en d'autres termes, pour le remplissage automatique des auges. On connaît à l'heure actuelle deux types de doseuses d'alimentation, conçus pour satisfaire à ce besoin, qui mettent en oeuvre deux procédés différents.

Suivant un premier procédé connu, l'alimentation de chaque truie est assurée au moyen d'une doseuse individuelle, vers laquelle la nourriture est amenée par un système de transport commun et introduite dans les auges au moyen d'un système de remplissage commun, composé de dispositifs de dosage individuels. Ce procédé connu présente toutefois l'inconvénient que, pour chaque truie, doit être prévu un dispositif de dosage individuel.

Suivant un deuxième procédé connu est prévu un seul dispositif d'alimentation à commande par ordinateur pour les animaux, qui ne sont pas séparés, mais sont en mesure de se déplacer librement dans l'étable. Chaque animal est pourvu d'une plaquette d'identification portée au moyen d'un collier. Lorsque l'animal se met en contact avec ce dispositif d'alimentation ou s'en approche, cette plaquette est détectée et l'animal reçoit sa ration de nourriture ou ne reçoit pas de nourriture selon l'information ainsi reçue.

Jusqu'à présent, ce procédé d'alimentation a été appliqué uniquement à l'alimentation de vaches laitières. Il présente toutefois plusieurs inconvénients. Un premier inconvénient consiste en ce que les animaux sont libres dans l'étable, de sorte qu'il est assez difficile de choisir un animal déterminé dans le groupe. D'autres inconvénients sont la perte de colliers, la difficulté d'avoir un aperçu général sur le groupe et l'agressivité mutuelle des animaux.

Or, c'est pour remédier aux inconvénients susmentionnés et autres que la présente invention a pour objet un procédé pour débiter de la nourriture dans des auges séparées au moyen d'un seul dispositif de dosage, conçu de manière à satisfaire le besoin en nourriture de chaque truie ou d'autre animal.

L'invention préconise à cet effet la mise en oeuvre d'un procédé caractérisé en ce que chacun des animaux à nourrir dispose de sa propre auge d'alimentation équipée ou non d'un système à réserve et en ce que ces auges sont desservies par un robot d'alimentation autonome, susceptible de se déplacer automatiquement, le dosage de la nourriture pour chaque auge s'effectuant en fonction des besoins individuels de l'animal trouvant sa nourriture dans l'auge concernée.

La présente invention se rapporte également à un dispositif pour la mise en oeuvre du procédé susmentionné. Ce dispositif se compose essentiellement d'un appareil roulant autonome à commande par ordinateur, dit "robot d'alimentation", muni d'une réserve de nourriture et se déplaçant le long de toutes les auges, de manière à déposer pour chaque truie une quantité déterminée de nourriture, calculée au préalable, dans son auge.

La quantité de nourriture ainsi débitée par l'appareil d'alimentation en question est choisie automatiquement en fonction de la durée de gestation de chaque truie individuelle ou du nombre de porcelets qu'elle a mis bas, l'éleveur étant en mesure de régler lui-même la quantité de nourriture à fournir à chaque truie individuelle.

Les caractéristiques et avantages du système selon l'invention ressortiront mieux de la description détaillée suivante d'un mode d'exécution préféré, donné exclusivement à titre d'exemple sans la moindre intention restrictive, avec référence aux dessins annexés, où

la figure 1 représente une vue de dessus d'un dispositif selon l'invention;

la figure 2 représente une vue latérale d'un robot d'alimentation susceptible d'être employé dans le dispositif selon la figure 1; et

la figure 3 représente une vue d'arrière du robot d'alimentation selon la figure 2.

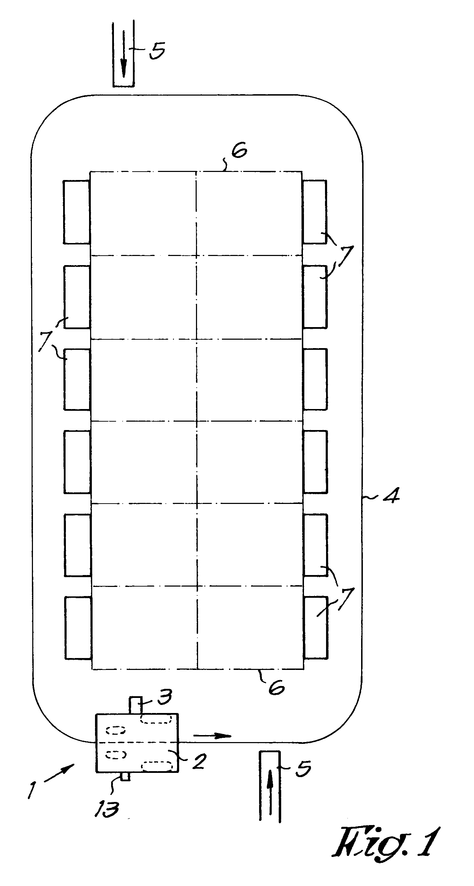

Comme le montre la figure 1, le dispositif pour la mise en oeuvre du procédé selon l'invention comporte essentiellement un appareil ou chariot automobile 1 à commande autonome, muni d'une trémie de chargement 2 et d'un dispositif de dosage et/ou de déchargement 3, ainsi que d'un guidage 4 pour guider le chariot 1, d'un ou de plusieurs systèmes de chargement 5 et d'une unité de commande à ordinateur (non représenté dans les figures), susceptible ou non d'être incorporé dans ledit chariot 1.

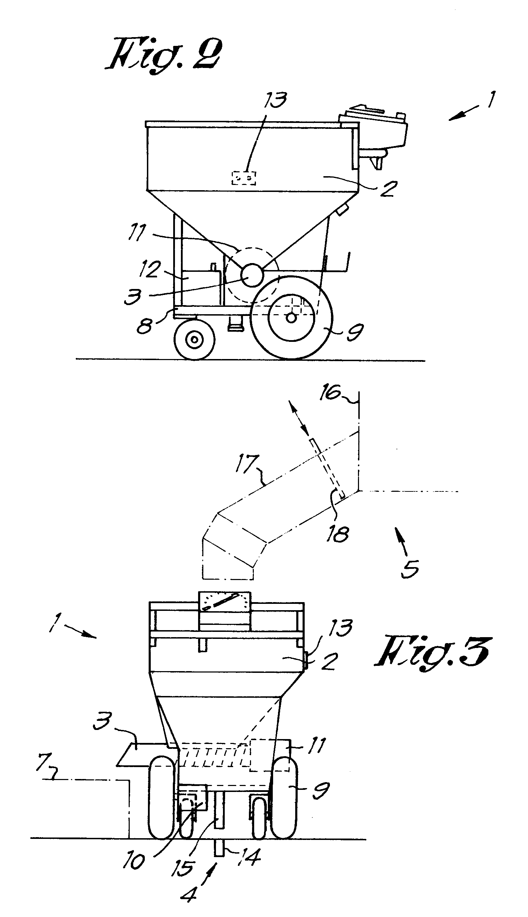

La figure 1 représente en outre de manière schématique une étable, divisée en une pluralité de compartiments 6, qui sont équipés chacun de sa propre auge d'alimentation 7. Le chariot 1, représenté par les figures 2 et 3, est muni d'un châssis 8 à roues 9, telles que des roues à pneu de caoutchouc ou autres, susceptible d'être commandé au moyen d'un moteur 10.

Ladite trémie 2, dont la section diminue graduellement de haut en bas, porte à son niveau inférieur ledit dispositif de dosage et/ou de déchargement, qui, dans l' exemple d'exécution ici décrit et représenté, se présente sous forme d'un vérin ou d'une vis d'Archimède, qui, par rotation, se prête à l'évacuation latérale de nourriture hors de la trémie 2 portée par le chariot 1, cette vis étant, à cet effet, attaquée par un deuxième moteur 11.

Les moteurs 10 et 11 sont de préférence des moteurs électriqeus, alimentés par une tension de service de 24 volts, fournie par une batterie 12. Le chariot 1 est muni d'un moyen de connexion automatique 13 pour assurer la recharge de la batterie 12 pendant les périodes de repos du véhicule. Ce moyen de connexion se compose essentiellement d'une pluralité de solides contacteurs, situés, d'une part, en des points fixes le long de la voie suivie par le chariot et montés, d'autre part, sur le chariot.

Le guidage 4 du chariot 1 pourra se composer de divers éléments de guidage connus, tels que, suivant une première solution, un système de guidage mécanique disposé le long d'un fil ou rail.

L'installation est, selon le mode d'exécution illustré par la figure 3, équipée d'un guidage du type à induction à conducteur 14 noyé dans le sol. Le chariot 1 est, de manière connue en soi, également muni d'un détecteur 15 et d'un système de commande y connecté en vue de la commande du sens de roulement du chariot.

Le fonctionnement du système de guidage 4 du chariot 1 est, selon une troisième possibilité, basé sur un système de commande laser, suffisamment connu en soi. Et le chariot pourra, suivant une quatrième possibilité, être guidé sur des rails métalliques ou des rails de matière plastique situés à côté ou au-dessus des compartiments occupés par les animaux.

Chaque système de chargement 5 se compose, par exemple, comme le montre la figure 3, d'un silo 16, d'une conduite d'amenée 17 pouvant s'étendre jusqu'au-dessus de la tremie 2, et d'un élément de fermeture automatique 18 commandé par ladite unité de commande à ordinateur. Suivant une variante de mise en oeuvre, ladite conduite d'amenée 17 contient une vis d'Archimède.

Ladite unité de commande à ordinateur est munie de plusieurs détecteurs et éléments de commande, ainsi que d'un microprocessor. C'est ainsi que le long de toute la voie suivie par le chariot 1 sont prévus des détecteurs servant à arrêter ou non le chariot 1 aux endroits appropriés et à commander les opérations requises. Ces endroits sont principalement déterminés par les différentes auges 7, les systèmes de chargement 5 et les points où s'établit le contact avec le dispositif de connexion automatique 13.

Ledit dispositif de dosage et/ou de déchargement est muni d'un detecteur servant à déterminer la quantité de nourriture à décharger. En présence d'une vis d'Archimède, ce détecteur se présente sous forme d'un compte-tours, étant donné que le nombre de tours/minute de la vis est proportionnel à la dose.

Un autre détecteur assure, lors du remplissage de la trémie 2, que le mécanisme de chargement 5 commence à fonctionner à temps et arrête automatiquement son activité de chargement lorsque le chariot 1 est entièrement rempli.

Le microprocessor assure à son tour qu'une dose déterminée de nourriture est, de manière individuelle, déchargée dans chaque auge 7 selon des données bien déterminées.

Le microprocessor pourra se trouver soit sur le chariot, soit ailleurs en un point situé à l'intérieur ou à l'extérieur de l'étable. Inutile de dire que, dans ce dernier cas, devra être prévu un système de télécommande sans fil où à fil. L'information requise pour le fonctionnement du microprocessor pourra lui être fournie au moyen d'un clavier ou d'un autre système analogue approprié.

Dans un mode de mise en oeuvre préféré de l'invention concernant une application spéciale, à savoir l'élevage de truies, le microprocessor pourra être en mesure de stocker les données suivantes dans sa mémoire:

a) le numéro de chacune des truies présentes;

b) le numéro du compartiment où est logée la truie;

c) le numéro du verrat par lequel la truie a été saillie;

d) le nombre de jours que la truie est déjà en gestation;

e) la quantité de nourriture fournie à chaque truie individuelle; et

f) un code d'alimentation pour chaque truie.

La ration, dont chaque truie a besoin et qui est fournie par la méthode précédemment décrite, est calculée par le microprocessor à partir des trois données suivantes: la date à laquelle la truie a été saillie, la date de la mise bas et la date du sevrage des porcelets. Toutes les données pourront de la manière susmentionnée être introduites dans le microprocessor par l'éleveur au moyen d'un clavier ou bien être inscrites dans la mémoire du microprocessor au moyen d'un terminal spécial, qui enregistre les données à l'aide d'un lecteur optique.

Suit ici la description plus détaillée du procédé précédent, tel qu'il se pratique de préférence dans l'élevage de truies. Le procédé d'élevage décrit ci-dessous sert en premier lieu à assurer une distribution rationnelle, adaptée aux besoins individuels des truies et permettant ainsi la réalisation d'économies importantes dans l'alimentation des animaux.

On diminue d'abord la ration de la truie pendant la période allant de sa saillie jusqu'au 90-ième jour de la gestation et on l'augmente ensuite à partir du 90-ième jusqu'au 112-ième jour de la gestation. Cette pratique assure des économies de nourriture relativement importantes, pouvant aller jusqu'à 8-10%. Elle n'influence pas les résultats de l'élevage, étant donné que les porcelets se développent surtout au dernier stade de la gestation. Ensuite, on diminue la ration à partir du 113-ième jour de la gestation jusqu'à la mise bas, qui à lieu environ au 115-ième jour. Après la mise bas, la ration est augmentée graduellement jusqu'à 1 kg plus 0,5 kg par porcelet à allaiter.

Le sevrage des porcelets a lieu à la fin de la période de lactation, dont la durée variable (de 3 à 6 semaines) est déterminée par l'éleveur.

L'alimentation de la truie est arrêtée dès le sevrage pour tarir la production de lait et préparer la truie à une nouvelle période de chaleur. Après une période fixe de deux jours, la truie reçoit de nouveau une ration abondante et est mise en contact avec verrat. D'habitude, la saillie a lieu à peu près le septième jour après le sevrage. L'alimentation abondante est arrêtée au moment de la saillie et le cycle de reproduction recommence.

On voit de ce qui précède que les rations à donner aux truies peuvent être déterminées de manière rationnelle par le microprocessor à partir de la date de saillie, la date de mise bas et la date de sevrage.

Après l'introduction des codes d'alimentation susmentionnés, l'éleveur est en mesure d'intervenir dans le programme d'alimentation. C'est ainsi, par exemple, que la truie reçoit selon le code 1 une ration réduite au minimum, selon le code 2 cette ration minimale augmentée de 100 g, selon le code 0 une ration totalement différente, etc.

Ce système de codage présente de grands avantages pour l'alimentation des animaux. C'est ainsi, par exemple, qu'il permet de donner une ration totalement différente à une truie malade, de donner de plus fortes rations d'aliments riches en calories, d'adapter la ration aux conditions climatologiques et de répartir la nourriture selon les besoins individuels des truies, qui varient essentiellement selon qu'il s'agit d'une grande truie, d'unejeune truie encore à l'âge de croissance ou d'une petite truie.

En outre, l'ordinateur retient dans sa mémoire toutes les informations concernant les rations données aux truies permettant la détermination par période, par exemple tous les trois mois, de la consommation de nourriture de chaque truie individuelle et de l'ensemble des truies de la porcherie.

Il va sans dire que l'invention se prête à de nombreuses variations du procédé concerné et du dispositif pour sa mise en oeuvre, évidemment soumises à la condition de ne pas dépasser son cadre. C'est ainsi, par exemple, que le système selon l'invention se prête à l'équipement de toutes sortes d'installations d'élevage, et cela, le cas échéant, moyennant adaptation de la forme et des dimensions du chariot 1. Dans les installations d'élevage de truies, ce chariot a de préférence une hauteur de 1,20 m, tandis que la trémie a une contenance d'environ 200 kg de nourriture.

Inutile de souligner que l'invention ne se limite pas à l'exemple d'application décrit dans les lignes précédentes, mais prévoit toutes sortes de modifications et d'adaptations du procédé concerné et de l'installation pour le remplissage dûment dosé d'auges d'alimentation, évidemment à condition de ne pas sortir du cadre de l'invention, délimité par les revendications formulées ci-après.

Revendications
_____

1. Procédé de remplissage d'auges d'alimentation, par lequel de la nourriture est déchargée automatiquement dans les auges d'une étable, caractérisé essentiellement en ce que chaque animal dispose de sa propre auge d'alimentation (7), équipée ou non d'un système à réserve, et en ce que ces auges (7) sont desservies par un robot d'alimentation autonome, susceptible de se déplacer automatiquement, le dosage de la nourriture au niveau de chaque auge (7) s'effectuant en fonction du besoin individuel de chaque animal recevant sa ration par l'entremise de son auge (7).

2. Procédé selon la revendication 1, caractérisé en ce que les auges (7) sont desservies au moyen d'un chariot mobile (1) se déplaçant automatiquement, en ce que ce chariot (1) débite dans chaque auge une quantité de nourriture bien déterminée au moyen d'un dispositif de dosage et/ou de déchargement, et en ce que la commande du chariot et du fonctionnement de ce dispositif de dosage (3) s'effectue au moyen d'une unité de commande à ordinateur.

3. Procédé selon la revendication 2, caractérisé en ce que ladite unité de commande à ordinateur est disposée sur le chariot (1).

4. Procédé selon la revendication 2, caractérisé en ce que ladite unité de commande à ordinateur est un dispositif fixe monté dans l'étable.

5. Procédé selon l'une ou l'autre des revendications précédentes, caractérisé en ce que ledit chariot (1) est, lors de son déplacement, chargé de nourriture à des endroits bien déterminés, à l'aide d'au moins un système de chargement.

6. Procédé selon l'une ou l'autre des revendications précédentes, caractérisé en ce qu'est prévue sa mise en oeuvre dans l'élevage de truies, les rations étant calculées par ledit ordinateur en fonction de la date de la saillie de la truie, la date de mise bas et la date de sevrage des porcelets.

7. Procédé selon la revendication 6, caractérisé en ce que la truie reçoit une ration diminuée dans la période allant de la saillie jusque 90-ième jour de la gestation, une ration augmentée dans la période allant du 90-ièmejusqu'au 112-ième jour de la gestation, une ration diminuée dans la période allant du 113-ième jour de la gestation jusqu'à la mise bas, et après la mise bas une ration graduellement augmentée jusqu'à 1 kg plus 0,5 kg par porcelet à allaiter; la truie étant mise à jeûne les deux premiere jours qui suivant immédiatement le sevrage, après quoi elle est abondamment nourrie jusqu'à la nouvelle saillie.

8. Dispositif pour la mise en oeuvre du procédé selon les revendications précédentes, caractérisé en ce qu' il se compose essentiellement d'un dispositif automobile ou chariot (1) à commande autonome, muni d'une trémie (2), d'un dispositif de dosage et/ou de déchargemment (3), d'un guidage (4) servent à guider ledit chariot (1) le long des auges (7) de l'étable, d'au moins un système de chargement (5) pour recharger ladite trémie (2), et d'une unité de commande à ordinateur pour commander ledit chariot (1) et ledit dispositif de dosage et/ou de déchargement (3).

9. Dispositif selon la revendication 8, caractérisé en ce que ledit dispositif de dosage et/ou de déchargement (3) se présente sous forme d'une vis d'Archimède ou d'un autre système de dossage volumétrique connu, approprié, quelconque.

10. Dispositif selon la revendication 9, caractérisé en ce que ladite vis d'Archimède est pourvue d'un compte-tours permettant de déterminer les quantités de nourriture débitées.

11. Dispositif selon les revendications 8-10, caractérisé en ce que ledit chariot (1) et ledit dispositif de dosage et/ou de déchargement (3) sont commandés au moyen de moteurs électriques (10,11).

12. Dispositif selon la revendication 11, caractérisé en ce que lesdits moteurs électriques (10,11) sont des moteurs à courant continu de 24 V et en ce que ledit chariot (1) est équipé d'une batterie pour l'alimentation de ces moteurs électriques (10,11).

13. Dispositif selon la revendication 11 ou 12, caractérisé en ce que ledit chariot (1) est équipé d'un dispositif de connexion automatique (13) assurant le chargement de la batterie (12) durant les temps de repos du chariot (1).

14. Dispositif selon les revendications précédentes 8-13, caractérisé en ce que ledit système de guidage (4) se compose d'un guidage mécanique s'étendant le long d'un fil ou rail.

15. Dispositif selon l'une ou l'autre des revendications précédentes 8-13, caractérisé en ce que ledit système guidage (4) se compose d'un guidage inductif s'étendant le long d'un conducteur (14) noyé dans le sol.

16. Dispositif selon l'une ou l'autre des revendications précédentes 8-13, caractérisé en ce que ledit système guidage (4) se présente essentiellement sous forme d'un système de commande laser.

17. Dispositif selon l'une ou l'autre des revendications précédentes 8-16, caractérisé en ce que ledit chariot (1) se déplace au moyen de roues à pneus de caoutchouc (9).

18. Dispositif selon l'une ou l'autre des revendications précédentes 8-17, caractérisé en ce que ledit système de chargement (5) se compose d'un silo (16), d'une conduite d'amenée (17) s'étendant à partir du silo (16) jusqu'au-dessus de ladite trémie (2) du chariot (1), et d'un élément de fermeture (18) situé dans ladite conduite d'amenée (17).

19. Dispositif selon l'une ou l'autre des revendications précédentes 8-17, caractérisé en ce que ledit système de chargement (5) se présente sous forme d'un silo (16) équipé d'une vis d'Archimède s'étendant jusqu'au-dessus de ladite trémie (2).

*Fig. 1*

*Fig. 2*

13

1

2

11

12

3

8

9

---

16

17

18

5

1

13

2

*Fig.3*

3

7

11

9

10

15

14

4